# EUROPÄISCHE PATENTSCHRIFT

(11) **EP 2 916 183 B1**
(45) Veröffentlichungstag und Bekanntmachung des Hinweises auf die Patenterteilung: **09.11.2016**
(21) Anmeldenummer: 14158000.1
(22) Anmeldetag: 06.03.2014
(51) Int. Cl.: G05B 19/042, G06F 9/44

(54) **Verfahren zur Erzeugung eines auf einem Steuerungssystem ausführbaren Steuerungsprogramms**
Method for generating a control program for a control system
Procédé de génération d'un programme de commande pour un système de commande

(43) Veröffentlichungstag der Anmeldung: 09.09.2015
(73) Patentinhaber: dSPACE digital signal processing and control engineering GmbH, 33102 Paderborn (DE)
(72) Erfinder: Fischer, Karsten, 33098 Paderborn (DE); Hillebrand, Sebastian, 34431 Marsberg (DE)

(56) Entgegenhaltungen:
- DE-A1-102004 037 686
- US-B1- 7 752 559
- US-B1- 8 522 196

## Beschreibung

Die Erfindung betrifft ein computerimplementiertes Verfahren zur Erzeugung eines auf einem Steuerungssystem ausführbaren Steuerungsprogramms aus einem grafischen Steuerungsmodell, wobei das Steuerungssystem eine Prozessschnittstelle aufweist und das Steuerungssystem so eingerichtet ist, dass über die Prozessschnittstelle wenigstens eine Prozessgröße eines physikalischen Prozesses von dem Steuerungssystem erfasst und/oder eine Ausgangsgröße zur Beeinflussung des physikalischen Prozesses von dem Steuerungssystem ausgegeben werden kann, wobei das Steuerungssystem mindestens eine elektronische Rechnereinheit mit mindestens einer Fixed-Point-Execution-Unit (FXP-Unit) und mit mindestens einer Floating-Point-Execution-Unit (FLP-Unit) aufweist, und wobei das graphische Steuerungsmodell eine Anzahl von Modelloperationen aufweist.

Derartige Verfahren zur computergestützten - also rechnermäßig automatisierten - Erzeugung eines ausführbaren Steuerungsprogramms aus einem grafischen Steuerungsmodell sind seit längerem bekannt und gehören zu den grundlegenden Funktionalitäten von Entwicklungsumgebungen zur Erzeugung von Programmen für Steuerungssysteme wie z. B. Steuergeräte. Das grafische Steuerungsmodell liegt meist in Form eines Blockschaltbildes vor, mit dessen Hilfe beispielsweise die mathematische Funktionalität eines Regelungsalgorithmus modelliert und dargestellt wird. In der industriellen Praxis liegen derartige Steuerungssysteme häufig als in einen übergeordneten technischen Prozess eingebettete Kleinrechner vor, im automotiven Bereich werden derartige Steuerungssysteme meist als Steuergeräte bezeichnet.

Verfahren zur Erzeugung eines ausführbaren Steuerungsprogramms aus einem grafischen Steuerungsmodell werden gegenständlich als Codegeneratoren bezeichnet. Sie gewährleisten die sichere und fehlerfreie Übertragung einer abstrakten Funktionsbeschreibung (graphisches Steuerungsmodell) in ein hardwarenahes Programm für das Zielsystem (Steuerungssystem). Ein Verfahren der Erzeugung eines Steuerungsprogramms ist ausführlicher beispielsweise beschrieben in der DE 10347891 A1.

Die Rechnereinheiten von Steuerungssystemen weisen üblicherweise ein Ganzzahl-Rechenwerk auf, das im englischen Sprachgebrauch oft als Integer-Execution-Unit (IEU) bezeichnet wird, nachfolgend als Fixed-Point-Execution-Unit (FXP-Unit) bezeichnet. Mit diesen Integer- oder Fixed-Point-Execution-Units können ganze Zahlen wie auch Festkomma-Zahlen (Fixed-Point-Numbers) berechnet werden, da die Festkomma-Arithmetik der Ganzzahl-Arithmetik prinzipiell entspricht. Da nachfolgend von Fixed-Point-Operationen (und nicht Integer-Operationen) und Floating-Point-Operationen (Gleitkomma-Operationen, FLP-Operationen) die Rede ist, wird das Ganzzahl-Rechenwerk als Fixed-Point-Execution-Unit (FXP-Unit) bezeichnet im Gegensatz zum Gleitkomma-Rechenwerk, für das die Bezeichnung Floating-Point-Execution-Unit (FLP-Unit) üblich ist. Mit diesem Verständnis schließen Fixed-Point-Operationen Integer-Operationen mit ein.

Da elektronische Rechnereinheiten insbesondere eingebetteter Steuerungssysteme früher häufig nur über eine FXP-Unit verfügten, werden bei aus dem Stand der Technik bekannten Verfahren sämtliche Modelloperationen des graphischen Steuerungsmodells ausschließlich in Fixed-Point-Operationen (FXP-Operationen) des generierten Programmcodes übersetzt. Diese Vorgehensweise stellt zwar sicher, dass der mit dem angewendeten Verfahren generierte Programmcode und das daraus übersetzte Steuerungsprogramm auf praktisch jeder Rechnereinheit dem Grunde nach lauffähig ist, jedoch werden die Hardware-Ressourcen dann nur zum Teil verwendet, wenn die elektronische Rechnereinheit des Steuerungssystems neben der FXP-Unit auch eine FLP-Unit aufweist. Da es sich bei den hier betrachteten Steuerungssystemen in der Regel um unter Echtzeitbedingungen arbeitende Abtastsysteme handelt, bei denen für die Ausführung des Steuerungsprogramms also nicht beliebig viel Zeit zur Verfügung steht, müssen leistungsfähigere Steuerungssysteme dann zum Einsatz kommen, wenn die FXP-Unit ausgelastet ist und keine weiteren Berechnungsschritte in dem vorgegebenen Zeitraster mehr ausgeführt werden können.

Aus der US 7,752,559 B1 ist ein computerimplementiertes Verfahren bekannt, bei dem auf einem Mikrocontroller ausführbarer Programmcode anhand eines graphischen Modells in einer Modellierungsumgebung erzeugt wird. Der Nutzer wird zur Angabe mindestens eines Ziels der Codegenerierung aufgefordert, wobei das Ziel sich auf eine Eigenschaft des anhand des graphischen Modells erzeugten Programmcodes bezieht. Das graphische Modell beschreibt ein zeitabhängiges Verhalten eines dynamischen Systems mittels Differential- und/oder Differenzengleichungen und/oder algebraischen Gleichungen und ist zur Simulation des dynamischen Systems anhand der Gleichungen geeignet. Parameter des graphischen Modells, welche mit dem angegebenen Ziel der Codeerzeugung nicht konsistent sind, werden angepasst, und der Programmcode für den Mikrocontroller wird in Übereinstimmung mit dem angegebenen Ziel erzeugt. Als Ziele der Codegenerierung kann der Nutzer beispielsweise die Erzeugung von Fixed-Point- Code, Floating-Point-Code oder Gemischtem Code oder eine Optimierung der Verwendung von flüchtigem oder nichtflüchtigem Speicher angeben.

Aufgabe der vorliegenden Erfindung ist es, ein Verfahren zur Erzeugung eines ausführbaren Steuerungsprogramms aus einem grafischen Steuerungsmodell anzugeben, mit dem die Ressourcen des Steuerungssystems besser nutzbar sind.

Die zuvor hergeleitete und aufgezeigte Aufgabe ist bei dem beschriebenen Verfahren zur Erzeugung eines ausführbaren Steuerungsprogramms zunächst dadurch gelöst, dass das graphische Steuerungsmodell in Programmcode so übersetzt wird, dass der generierte Programmcode wenigstens eine FXP-Operation und wenigstens eine FLP-Operation aufweist und dass der generierte Programmcode nachfolgend in das ausführbare Steuerungsprogramm übersetzt wird, so dass bei Ausführung des Steuerungsprogramms auf dem Steuerungssystem ein Teil des Steuerungsprogramms auf der FXP-Unit ausgeführt wird und ein anderer Teil des Steuerungsprogramms auf der FLP-Unit ausgeführt wird.

Durch die erfindungsgemäße Verfahrensweise wird vermieden, dass bei der Übersetzung des grafischen Steuerungsmodells in Programmcode nur solcher Programmcode erzeugt wird, der einzig von der FXP-Unit Gebrauch macht oder nur solcher Programmcode erzeugt wird, der ausschließlich von der FLP-Unit Gebrauch macht. Die erfindungsgemäße Verfahrensweise erzwingt also, dass das grafische Steuerungsmodell auf dem Zielsystem sowohl auf der FXP-Unit wie auch auf der FLP-Unit berechnet wird, so dass insgesamt eine bessere Ressourcenausnutzung resultiert. Im Unterschied zu der bekannten Verfahrensweise können auf ein- und demselben Steuerungssystem deutlich umfangreichere Steuerungsprogramme berechnet werden als solche Steuerungsprogramme, die nach herkömmlichen Codegenerierungs-Verfahren erzeugt worden sind. Dadurch ist es möglich, mit ein- und demselben Steuerungssystem über die Prozessschnittstelle mit höheren Abtastraten und/oder unter Austausch einer höheren Anzahl an Prozessgrößen auf den verbundenen physikalischen Prozess einzuwirken.

Eine Weiterentwicklung des computerimplementierten Verfahrens zeichnet sich dadurch aus, dass so viele Modelloperationen des Steuerungsmodells in FXP-Operationen und FLP-Operationen des Programmcodes umgewandelt werden, dass im zeitlichen Mittel vergleichbare Auslastungen der FXP-Units und der FLP-Units der Rechnereinheit des Steuerungssystems resultieren. Die gleichmäßige Auslastung der FXP-Units und der FLP-Units führt dazu, dass im Mittel eine möglichst niedrige Auslastung der Units resultiert, so dass die Wahrscheinlichkeit dafür, dass Laufzeitschwankungen auf den Units zu einer Verletzung von Echtzeitbedingungen führen, gering ist.

Nach einer bevorzugten Ausgestaltung des Verfahrens ist vorgesehen, dass das Verhältnis der Anzahl von FXP-Operationen zu der Anzahl von FLP-Operationen des Programmcodes dem Verhältnis von pro Zeiteinheit auf den FXP-Units ausführbaren FXP-Operationen und auf den FLP-Units ausführbaren FLP-Operationen entspricht. Dieses Ergebnis ist durch das Verfahren ohne weiteres automatisiert erzielbar, wenn berücksichtigt wird, wie viele Taktzyklen die Rechnereinheit bzw. die verschiedenen Units der Rechnereinheit des Steuerungssystems für bestimmte FXP- und FLP-Operationen benötigt. Die Auswahl der umzuwandelnden Modelloperationen des Steuerungsmodells kann zufällig erfolgen oder auch gemäß bestimmter Auswahlkriterien, auf die nachfolgend eingegangen wird.

Der alleinige Umstand der Nutzung der FXP-Unit und der FLP-Unit der Rechnereinheit durch das Steuerungsprogramm ist für sich genommen schon vorteilhaft auch ohne Berücksichtigung der zeitlichen Koordination der Berechnungen. Ein besonders großer Effekt wird bei einer weiteren bevorzugten Ausgestaltung des computerimplementierten Verfahrens dann hervorgerufen, wenn die Durchmischung von FXP-Operationen des Programmcodes mit FLP-Operationen des Programmcodes so hoch ist, dass bei Ausführung des Steuerungsprogramms auf der Rechnereinheit des Steuerungssystems der Programmcode bzw. das Steuerungsprogramm gleichzeitig auf den FXP-Units und den FLP-Units der Rechnereinheit ausgeführt wird. Die geforderte Durchmischung von FXP-Operationen mit FLP-Operationen führt also dazu, dass die FXP-Units und die FLP-Units so mit Instruktionen gespeist werden, dass sie tatsächlich auch gleichzeitig Berechnungen durchführen und nicht nur abwechselnd, was den größten Laufzeiteffekt bewirkt.

Ein vorteilhafter Effekt ergibt sich bei dem erfindungsgemäßen Verfahren bereits, wenn beispielsweise eine Zufallsauswahl an Modelloperationen des Steuerungsmodells in entsprechende FLP-Operationen bzw. FXP-Operationen des Programmcodes umgewandelt wird, jedoch gibt es gemäß vorteilhafter Ausgestaltungen des Verfahrens auch gezielt anwendbare Kriterien, anhand derer entschieden werden kann, welche Teile des Steuerungsmodells für eine Umwandlung besonders geeignet sind.

Bei einer vorteilhaften Ausgestaltung des computerimplementierten Verfahrens ist vorgesehen, dass ganzzahlige Modelloperationen des Steuerungsmodells in FXP-Operationen des Programmcodes zur Berechnung auf einer FXP-Unit umgesetzt werden. Derartige ganzzahlige Modelloperationen, wie z. B. inkrementelle oder dekrementelle Zähler für Schleifen, Switch-Case-Operationen oder auch Bit-Operationen, lassen keinen Vorteil bei einer Umwandlung zum Datentyp Floating-Point erkennen.

Vorteilhaft kann es jedoch sein, eine Modelloperation des Steuerungsmodells, die bei einer Realisierung als FXP-Operation im Programmcode eine Fixed-Point-Umskalierung erfahren würde, in eine FLP-Operation des Programmcodes umzuwandeln. Durch diese Maßnahme können die Rechenschritte für die Fixed-Point-Umskalierung eingespart werden, so dass eine originäre Gleitkomma-Berechnung zeitsparend ist bzw. die notwendige Umwandlung von FXP nach FLP im Programmcode nicht weiter ins Gewicht fällt. Gemäß einer weiteren Ausgestaltung des Verfahrens ist vorgesehen, dass eine Modelloperation im Steuerungsmodell, die bei Umsetzung als FXP-Operation im Programmcode zu einer oder mehreren m-Bit-FXP-Operationen im Programmcode führen würde, stattdessen in eine oder mehrere m-Bit FLP-Operation im Programmcode umgewandelt wird, wenn die Rechnereinheit eine m-Bit FLP-Unit aufweist aber keine m-Bit FXP-Unit aufweist. Wenn beispielsweise aus der Modellvorgabe eine 64-Bit FXP-Operation im Programmcode resultiert, aber nur eine 32-Bit FXP-Unit vorhanden ist, dann muss im generierten Code die geforderte 64-Bit Operation mit mehreren einzelnen 32-Bit FXP-Operationen nachgebildet werden, was sehr aufwendig ist. In diesem Fall ist es sehr lohnenswert, eine Umwandlung in 64-Bit FLP-Operationen vorzunehmen, insoweit eine 64-Bit FLP-Unit auf der Rechnereinheit vorhanden ist.

In grafischen Steuerungsmodellen gibt es seriell und parallel verknüpfte Operationen, wobei seriell verknüpfte Operationen zeitlich zwingend hintereinander ausgeführt werden, weil das Resultat der einen Operation Eingangsgröße der nachfolgenden Operation ist. Parallele Operationen bzw. parallele Berechnungsstränge des Steuerungsmodells können zeitlich auch parallel bearbeitet werden, da die in den verschiedenen Berechnungssträngen berechneten Werte keinen gegenseitigen Einfluss aufeinander haben.

Gemäß dem erfindungsgemäßen Verfahren ist vorgesehen, dass bei mehreren parallelen Berechnungssträngen des Steuerungsmodells solche Stränge von Modelloperationen des Steuerungsmodells in FLP-Operationen des Programmcodes umgewandelt werden, die die meisten FXP-Umskalierungen aufweisen bzw. bei einer Umwandlung in FXP-Operationen die meisten FXP-Umskalierungen aufweisen würden. Diese FXP-Umskalierungen im Programmcode entfallen, wenn von vornherein FLP-Operationen verwendet werden. Vorzugsweise wechselt der Berechnungsstrang dann nicht zwischen FLP-Operationen und FXP-Operationen, sondern bleibt im Programmcode bei FLP-Operationen. Dabei können Codeabschnitte von unabhängigen Modell-Berechnungssträngen im Programmcode auch abwechselnd platziert werden, um die zeitliche Auslastung der FXP- und FLP-Units weiter günstig zu beeinflussen (beispielsweise um evtl. Detektierungsschwächen im eingesetzten Compiler auszugleichen).

Es sind auch solche Steuerungsmodelle denkbar, in denen Modelloperationen dafür bestimmt bzw. vorgesehen sind, im Programmcode in FXP-Operationen bzw. in FLP-Operationen übersetzt zu werden. Bei derartigen Steuerungsmodellen ist gemäß einer vorteilhaften Ausgestaltung des Verfahrens vorgesehen, dass wenigstens eine FLP-Operation des Steuerungsmodells in eine FXP-Operation des Programmcodes umgewandelt wird und/oder dass wenigstens eine FXP-Operation des Steuerungsmodells in eine FLP-Operation des Programmcodes umgewandelt wird. Durch diese Maßnahme ist es möglich, praktisch ein beliebiges Verhältnis von FXP-Operationen und FLP-Operationen innerhalb des Programmcodes einzustellen, dass die Auslastungen der FXP-Units und der FLP-Units der Rechnereinheit des Steuerungssystems auch einstellbar sind.

Gemäß einem weiteren bevorzugten Ausführungsbeispiel wird eine solche Auswahl von FLP-Operationen des Steuerungsmodells in FXP-Operationen des Programmcodes umgewandelt und/oder wird eine solche Auswahl von FXP-Operationen des Steuerungsmodells in FLP-Operationen des Programmcodes umgewandelt, dass die Anzahl der durch die Umwandlung verursachten Umrechnungen vom Datentyp Fixed-Point zum Datentyp Floating-Point im Programmcode und/oder vom Datentyp Floating-Point zum Datentyp Fixed-Point im Programmcode zumindest lokal minimal ist. "Lokal minimal" bedeutet in dieser Hinsicht, dass nicht zwingend alle möglichen Auswahlen von FLP-Operationen und von FXP-Operationen bewertet werden, sondern nur ein Teil der theoretisch möglichen Auswahlen, wobei die betrachteten Varianten beispielsweise Zufallsauswahlen sein können.

In einem weiteren Ausführungsbeispiel des Verfahrens ist vorgesehen, dass der aus dem grafischen Steuerungsmodell erzeugte Programmcode in einer Hardware-Beschreibungssprache vorliegt, wobei der Programmcode die Rechnereinheit des Steuerungssystems mit mindestens einer FXP-Unit und mit mindestens einer FLP-Unit beschreibt, wobei zusätzlich die Rechnereinheit die Funktionalität des Steuerungsmodells realisiert. Dieser Programmcode ist also nicht nur lauffähig auf einer bestimmten Ziel-Hardware, sondern er beschreibt die Ziel-Hardware sogar. Es kann beispielsweise vorgesehen sein, dass die Hardware-Beschreibungssprache ein Field Programmable Gate Array (FPGA) beschreibt und programmiert. Der Programmcode definiert in diesem Fall also, wie die auf dem FPGA vorgesehenen Funktionsstrukturen miteinander verschaltet und koordiniert sind. Da heutige FPGA teilweise weitere feste HW-Strukturen enthalten (sogenannte DSP-Einheiten), die z. B. speziell für FLP-Operationen eingesetzt werden, ist es vorteilhaft, beim Mischungsverhältnis von FXP-und FLP-Programmcode auf die Auslastung/Verfügbarkeit solcher HW-Elemente zu achten.

Im Einzelnen gibt es nun eine Vielzahl von Möglichkeiten, das erfindungsgemäße computerimplementierte Verfahren auszugestalten und weiterzubilden. Dazu wird auf die dem Patentanspruch 1 nachgeordneten Patentansprüche sowie auf die nachfolgende detaillierte Beschreibung bevorzugter Ausführungsbeispiele der Erfindung unter Bezugnahme auf die Zeichnung verwiesen. In der Zeichnung zeigt:
- Fig. 1: ein aus dem Stand der Technik bekanntes Verfahren zur Erzeugung eines ausführbaren Steuerungsprogramms auf einem Steuerungssystem,
- Fig. 2: schematisch das erfindungsgemäße Verfahren zur Erzeugung eines Steuerungsprogramms für ein Steuerungssystem,
- Fig. 3: schematisch eine weitere Ausgestaltung des erfindungsgemäßen Verfahrens zur Erzeugung eines Steuerungsprogramms,
- Fig. 4: schematisch eine auf Fig. 3 basierende weitere Ausgestaltung des erfindungsgemäßen Verfahrens zur Erzeugung eines Steuerungsprogramms,
- Fig. 5: ein grafisches Steuerungsmodell, das in ein Steuerungsprogramm zu übersetzen ist,
- Fig. 6: das grafische Steuerungsmodell gemäß Fig. 5 mit einem gekennzeichneten Modellteil, der mit FLP-Operationen realisiert wird und
- Fig. 7: das Steuerungsmodell gemäß Fig. 5 mit einem anderen gekennzeichneten Modellteil, der in FLP-Operationen übersetzt wird.

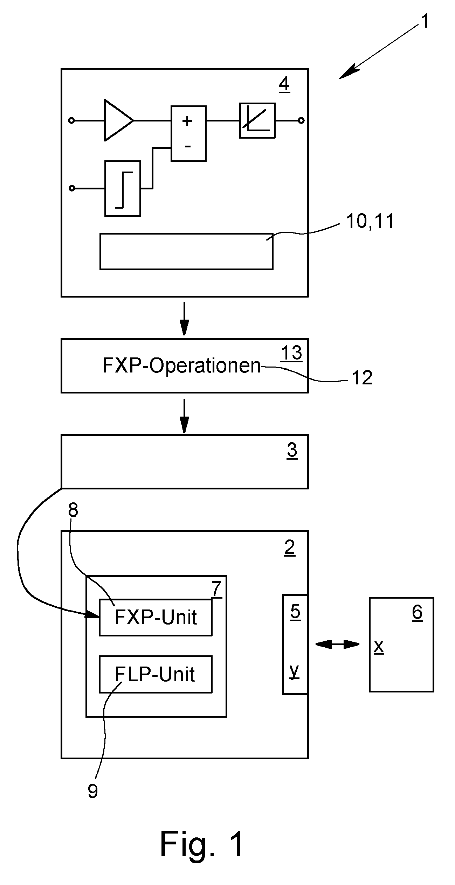

Fig. 1 zeigt ein computerimplementiertes Verfahren 1 zur Erzeugung eines auf einem Steuerungssystem 2 ausführbaren Steuerungsprogramms 3 aus einem grafischen Steuerungsmodell 4, wobei das Steuerungssystem 2 eine Prozessschnittstelle 5 aufweist. Das Steuerungssystem 2 ist so eingerichtet, dass über die Prozessschnittstelle 5 wenigstens eine Prozessgröße x eines physikalischen Prozesses 6 von dem Steuerungssystem 2 erfasst und/oder eine Ausgangsgröße y zur Beeinflussung des physikalischen Prozesses 6 von dem Steuerungssystem 2 ausgegeben werden kann. Das Steuerungssystem 2 weist eine elektronische Rechnereinheit 7 mit einer Fixed-Point-Execution-Unit (FXP-Unit) 8 und mit einer Floating-Point-Execution-Unit (FLP-Unit) 9 auf.

Das grafische Steuerungsmodell 4 umfasst in dem dargestellten Beispiel eine Anzahl von Modelloperationen 10, 11. Die Modelloperationen 10, 11 des Steuerungsmodells 4 sind vorliegend unspezifisch hinsichtlich des Datentyps. Soll eine Simulation direkt mit dem Steuerungsmodell 4 ausgeführt werden ("Offline-Simulation"), werden die Berechnungen in der Regel vollständig als FLP-Operationen ausgeführt; dies hat unmittelbar aber nichts zu tun mit dem hier interessierenden Code-Generierungsprozess aus dem Steuerungsmodell 4 heraus, der Gegenstand der weiteren Beschreibung ist.

Aus dem Stand der Technik ist gemäß Fig. 1 bekannt, sämtliche Modelloperationen 10, 11 des grafischen Steuerungsmodells 4 in FXP-Operationen 12 des Programmcodes 13 zu übersetzen, so dass der generierte Programmcode 13 quasi "universell" einsetzbar ist, da übliche Steuerungssysteme 2 zumindest eine FXP-Unit 8 zur Berechnung von Integer- bzw. Fixed-Point-Zahlen aufweisen, jedoch nicht zwingend eine FLP-Unit 9 zur Berechnung von Floating-Point-Operationen aufweisen müssen. Die Vorgehensweise führt dazu, dass das Steuerungssystem 2 nur teilweise ausgelastet ist, da von der FLP-Unit 9 kein Gebrauch gemacht wird.

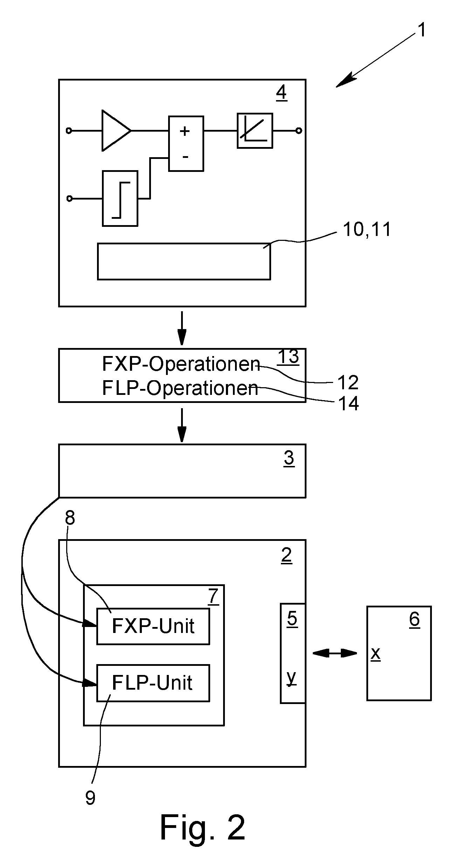

Dem gegenüber ist bei dem in Fig. 2 dargestellten erfindungsgemäßen computerimplementierten Verfahren vorgesehen, dass das grafische Steuerungsmodell 4 so in Programmcode 13 übersetzt wird, dass der generierte Programmcode 13 wenigstens eine FXP-Operation 12 und wenigstens eine FLP-Operation 14 aufweist und der generierte Programmcode 13 in das ausführbare Steuerungsprogramm 3 übersetzt wird, so dass bei Ausführung des Steuerungsprogramms 3 auf dem Steuerungssystem 2 ein Teil des Steuerungsprogramms 3 auf der FXP-Unit 8 ausgeführt wird und ein anderer Teil des Steuerungsprogramms 3 auf der FLP-Unit 9 ausgeführt wird. Das bedeutet, dass von beiden Units 8, 9 der Rechnereinheit 7 des Steuerungssystems 2 Gebrauch gemacht wird.

Die Übertragung des Steuerungsprogramms 3 sowohl auf die FXP-Unit 8 als auch auf die FLP-Unit 9 des Steuerungssystems 2 ist in Fig. 2 durch den Doppelpfeil zwischen dem Steuerungsprogramm 3 und der Rechnereinheit 7 angedeutet. Durch die Maßnahme, dass der generierte Programmcode 13 wenigstens eine FXP-Operation 12 und wenigstens eine FLP-Operation 14 aufweist, wird erzwungen, dass sowohl die FXP-Unit 8 als auch die FLP-Unit 9 der Rechnereinheit 7 des Steuerungssystems 2 eingesetzt werden, wodurch das Laufzeitverhalten gegenüber dem in Fig. 1 dargestellten Ausführungsbeispiel verbessert wird.

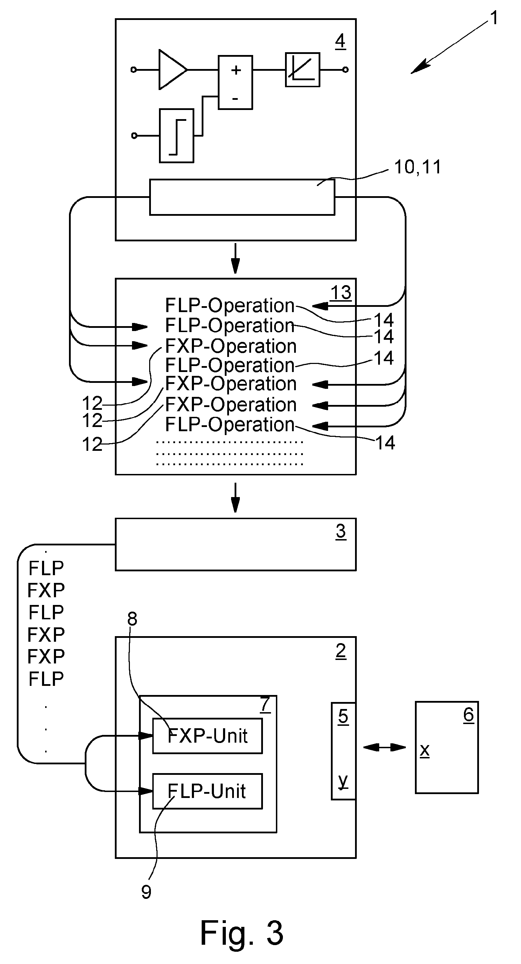

In Fig. 3 ist in größerem Detail nochmals dargestellt, dass einige Modelloperationen 10, 11 des Steuerungsmodells 4 in FXP-Operationen 12 des Programmcodes 13 übersetzt werden und dass einige Modelloperationen 10, 11 des Steuerungsmodells 4 in FLP-Operationen 14 des Programmcodes 13 umgewandelt werden. Die Umwandlungen sind hier mit der Maßgabe erfolgt, dass so viele Modelloperationen 10, 11 des Steuerungsmodells 4 in FXP-Operationen 12 des Programmcodes 13 umgewandelt worden sind und dass so viele Modelloperationen 10, 11 des Steuerungsmodells 4 in FLP-Operationen 14 des Programmcodes 13 umgewandelt worden sind, dass im zeitlichem Mittel ähnliche Auslastungen der FXP-Unit 8 und der FLP-Unit 9 der Rechnereinheit 7 resultieren.

Bei der Auswahl der umzuwandelnden Modelloperationen 10, 11 des Steuerungsmodells 4 ist ferner darauf geachtet worden, dass die Durchmischung von FXP-Operationen 12 des Programmcodes 13 mit FLP-Operationen 14 des Programmcodes 13 so hoch ist, dass bei Ausführung des Steuerungsprogramms 3 auf der Rechnereinheit 7 des Steuerungssystems 2 der Programmcode 13 gleichzeitig auf der FXP-Unit 8 und der FLP-Unit 9 der Rechnereinheit 7 ausgeführt wird. Durch die zeitgleiche Ausführung der Operationen und die zeitgleiche Inanspruchnahme der Units 8, 9 der Rechnereinheit 7 wird der größte Effekt hinsichtlich einer optimierten Laufzeit des Steuerungsprogramms 3 erzielt.

In Fig. 3 ist ferner zu erkennen, dass durch die vorbeschriebene Maßnahme auch im Instruktions-Strom - angedeutet zwischen dem Steuerungsprogramm 3 und den Units 8, 9 der Rechnereinheit 7 - eine Durchmischung von FLP- und FXP-Instruktionen erreicht worden ist, so dass bei der Speisung der Verarbeitungs-Units 8, 9 auch eine gleichzeitige Auslastung beider Units 8, 9 gewährleistet ist.

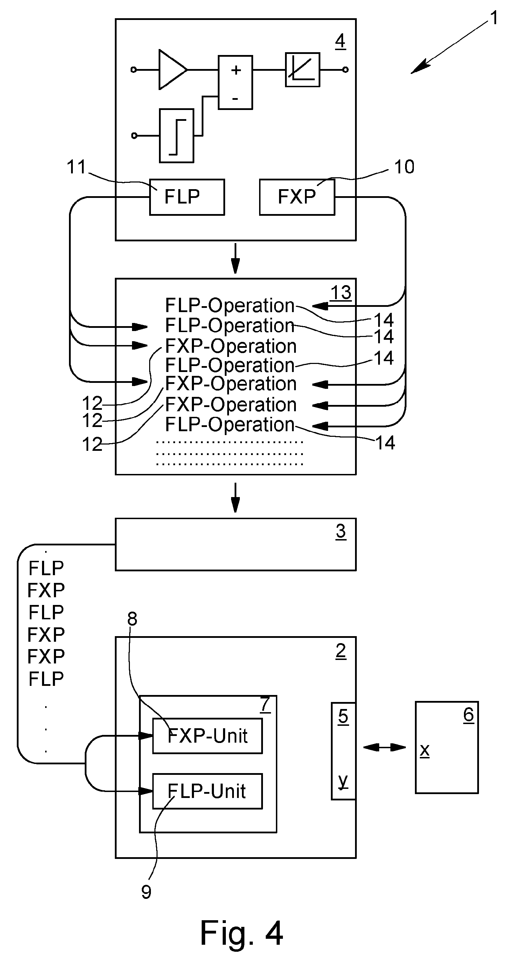

Der in Fig. 4 dargestellte Verfahrensablauf 1 basiert im Wesentlichen auf dem in Fig. 3 dargestellten Verfahrensablauf 1. Der wesentliche Unterschied besteht darin, dass schon im Steuerungsmodell 4 einige Modelloperation als FXP-Operationen 10 und einige Modelloperationen als FLP-Operationen 11 für die Codegenerierung bestimmt bzw. vorgesehen sind. Verfahrensgemäß werden nun nicht einfach FXP-Operationen 10 des Steuerungsmodells 4 in FXP-Operationen 12 des Programmcodes 3 und FLP-Operationen 11 des Steuerungsmodells 4) in FLP-Operationen 14 des Programmcodes 13 übertragen. Vielmehr ist vorgesehen, dass wenigstens eine FLP-Operation 11 des Steuerungsmodells 4 in eine FXP-Operation 12 des Programmcodes 13 umgewandelt wird und/oder dass wenigstens eine im Steuerungsmodell 4 als FXP-Operation 10 vorgesehene Modelloperation in eine FLP-Operation 14 des Programmcodes 13 umgewandelt wird. Bevorzugt wird dabei so vorgegangen, dass eine solche Auswahl von als FLP-Operationen 11 des Steuerungsmodells 4 bestimmte Modelloperationen in FXP-Operationen 12 des Programmcodes 13 umgewandelt wird und/oder dass eine solche Auswahl von als FXP-Operationen 12 des Steuerungsmodells 4 bestimmte bzw. vorgesehene Modelloperationen in FLP-Operationen 14 des Programmcodes 13 umgewandelt wird, dass die Anzahl der durch die Umwandlung verursachten Umrechnungen vom Datentyp Fixed-Point zum Datentyp Floating-Point im Programmcode 13 und/oder vom Datentyp Floating-Point zum Datentyp Fixed-Point im Programmcode 13 zumindest lokal minimal ist.

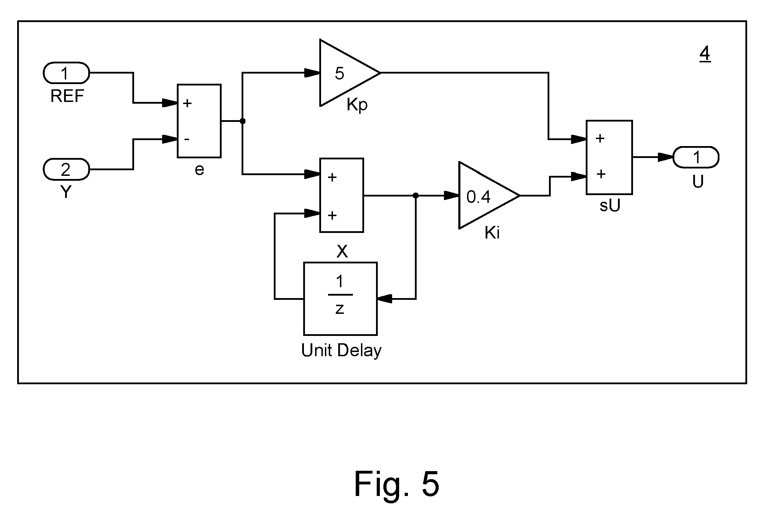

In den Figuren 5, 6 und 7 ist jeweils das gleiche grafische Steuerungsmodell 4 in Form eines Blockschaltbildes mit Übertragungsgliedern dargestellt. Aus den beiden Eingangsgrößen wird zunächst die Regeldifferenz e gebildet. Die Regeldifferenz e wird in einem oberen Berechnungsstrang mit dem Faktor Kp multipliziert und sie wird in einem unteren Berechnungsstrang nach einem rückgekoppelten Totzeitglied (Unit Delay) mit dem Faktor Ki multipliziert. Im nachfolgenden Summationsglied sU werden die Ergebnisse beider Berechnungsstränge zur Ausgangsgröße U addiert.

Nachfolgend ist im Hinblick auf Fig. 4 das Ergebnis einer Übersetzung des Steuerungsmodells 4 in Programmcode dargestellt, der ausschließlich FXP-Operationen enthält. Dieses Beispiel ist - wie die nachfolgenden Beispiele für Programmcodes auch - in der Programmiersprache C realisiert. Da FXP-Operationen lediglich mit Größen vom Datentyp Integer arbeiten, enthält der Programmcode ausschließlich int-Variablen. Um die unterschiedlich skalierten Integer- bzw. Festkomma-Zahlen miteinander verrechnen zu können, müssen entsprechende Schiebe-Operationen ("<<", ">>") vorgenommen werden. Auf die Details der an sich bekannten Festkomma-Arithmetik kommt es hier nicht an, wichtig ist allein der Umstand, dass das gezeigte Programmcode-Beispiel im Ergebnis zu einem Steuerungsprogramm führt, das lediglich auf der FXP-Unit 8 gemäß den Fig. 1 bis 4 ausgeführt werden kann, so dass die Hardware-Ressourcen nur teilweise genutzt werden.

```
 int e /* LSB: 2^-10 OFF: 0 MIN/MAX: -32 .. 31.9990234375 */;
 int x /* LSB: 2^-6 OFF: 0 MIN/MAX: -512 .. 511.984375 */;
 static unsigned int Unit_Delay = 0 /* LSB: 2^-6 OFF: 0 MIN/MAX:
                                               0 .. 1023.984375 */;
 e = (int) ((((int) REF) - ((int) Y)) >> 1);
 x = (int) (((unsigned int) (int) (e >> 4)) + Unit_Delay);
 Unit_Delay = (unsigned int) x;
 sU = (int) (((int) ((((int) e) * ((int) P_Kp)) >> 7)) + ((int)
             ((((int) x) * ((int) P_Ki)) >> 6)));
 U = sU;
```

Das folgende Code-Beispiel gibt die vollständige Übertragung des in Fig. 5 dargestellten Steuerungsmodells 4 in Programmcode wieder, der ausschließlich mit FLP-Operationen realisiert ist und demzufolge nur Größen vom Datentyp float enthält. Da es sich hier um Fließkomma-Operationen handelt, ist eine ständige Umskalierung wie bei den FXP-Operationen nicht erforderlich. Ein solcher in ein Steuerungsprogramm übersetzter Programmcode würde ausschließlich auf der FLP-Unit der Rechnereinheit 7 des Steuerungssystems 2 ausgeführt werden, so dass die FXP-Unit 8 ungenutzt bliebe.

```
 float e;
 float x;
 static float Unit_Delay = 0.F;
 e = REF - Y;
 x = e + Unit_Delay;
 Unit_Delay = x;
 sU = (e * P_Kp) + (x * P_Ki);
 U = sU;
```

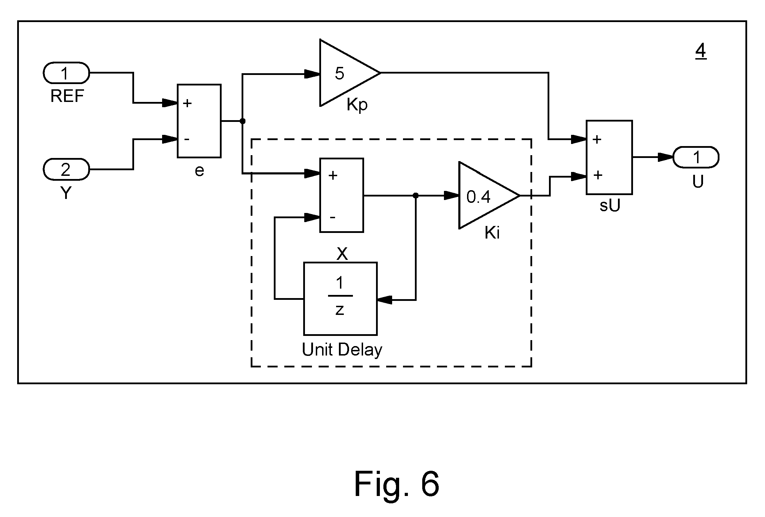

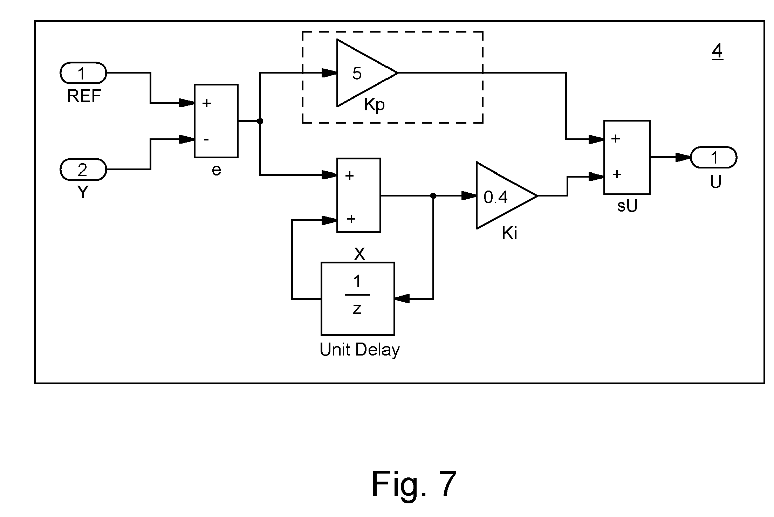

Bei den Ausführungsbeispielen gemäß den Fig. 6 und 7 wird jeweils davon ausgegangen, dass die Übertragung des grafischen Steuerungsmodells 4 bzw. der dort dargestellten Operationen regulär in FXP-Operationen im Programmcode erfolgt. Die durch Strichlinien markierten Bereiche geben jeweils den Teil des Steuerungsmodells 4 an, der in FLP-Operationen im Programmcode zu übersetzen ist.

Der nachfolgend aufgeführte Programmcode repräsentiert die Übertragung des Steuerungsmodells 4 gemäß Fig. 6. Es ist ohne weiteres zu erkennen, dass der erzeugte Programmcode sowohl Gleitkomma- wie auch Festkomma-Operationen aufweist (FLP-und FXP-Operationen), die dazu führen, dass das daraus erzeugte Steuerungsprogramm sowohl auf der in den Fig. 1 bis 4 dargestellten FXP-Unit 8 als auch auf der FLP-Unit 9 ausgeführt wird.

```
 float Ki;
 float x;
 int Kp /* LSB: 2^-6 OFF: 0 MIN/MAX: -512 .. 511.984375 */;
 int e /* LSB: 2^-10 OFF:0 MIN/MAX: -32 .. 31.9990234375 */;
 e = (int) ((((int) REF) - ((int) Y)) >> 1);
 Kp = (int) ((((int) e) * ((int) P_Kp)) >> 7);
 x = (((float) e) * 0.0009765625F) + Unit_Delay;
 Ki = x * P_Ki;
 sU = (int) (((((float) Kp) * 0.015625F) + Ki) * 64.F);
 U = sU;
 Unit_Delay = x;
```

Der nun folgende Programmcode stellt eine Übertragung des in Fig. 7 dargestellten Steuerungsmodells 4 dar, wobei lediglich die Multiplikation der Regeldifferenz e mit dem Faktor Kp in Fließkomma-Arithmetik durchgeführt wird. Demzufolge ist lediglich die Variable Kp vom Datentyp float, alle anderen Variablen und Berechnungen sind vom Datentyp int bzw. sind FXP-Operationen.

```
 float Kp;
 int Ki /* LSB: 2^-6 OFF: 0 MIN/MAX: -512 .. 511.984375 */;
 int e /* LSB: 2^-10 OFF: 0 MIN/MAX: -32 .. 31.9990234375 */;
 int x /* LSB: 2^-6 OFF: 0 MIN/MAX: -512 .. 511.984375 */;
 e = (int) ((((int) REF) - ((int) Y)) >> 1);
 Kp = ((float) e) * 0.0009765625F * P_Kp;
 x = (int) (((unsigned int) (int) (e >> 4)) + Unit_Delay);
 Ki = (int) ((((int) x) * ((int) P_Ki)) >> 6);
 sU = (int) ((Kp + (((float) Ki) * 0.015625F)) * 64.F);
 U = sU;
 Unit_Delay = (unsigned int) x;
```

Bei Vergleich der voranstehenden Programmcode-Beispiele zeigt sich, dass die Auswahl der Teile eines grafischen Steuerungsmodells 4, die in FXP-Operationen bzw. FLP-Operationen des Programmcodes umzuwandeln sind, einen Einfluss auf die Durchmischung des Programmcodes hinsichtlich der beiden verschiedenen Arten von Operationen hat. Mit den im allgemeinen Beschreibungsteil erläuterten Kriterien lassen sich derartige Durchmischungen gezielt erreichen.

## Patentansprüche

1. Computerimplementiertes Verfahren (1) zur Erzeugung eines auf einem Steuerungssystem (2) ausführbaren Steuerungsprogramms (3) aus einem graphischen Steuerungsmodell (4), wobei das Steuerungssystem (2) eine Prozessschnittstelle aufweist und das Steuerungssystem (2) so eingerichtet ist, dass über die Prozessschnittstelle (5) wenigstens eine Prozessgröße eines physikalischen Prozesses (6) von dem Steuerungssystem (2) erfasst und/oder eine Ausgangsgröße zur Beeinflussung des physikalischen Prozesses (6) von dem Steuerungssystem (2) ausgegeben werden kann, wobei das Steuerungssystem (2) mindestens eine elektronische Rechnereinheit (7) mit mindestens einer Fixed-Point-Execution-Unit (FXP-Unit, 8) und mit mindestens einer Floating-Point-Execution-Unit (FLP-Unit, 9) aufweist, wobei das graphische Steuerungsmodell (4) eine Anzahl von Modelloperationen (10, 11) aufweist, wobei das graphische Steuerungsmodell (4) in Programmcode (13) so übersetzt wird, dass der generierte Programmcode (13) wenigstens eine FXP-Operation (12) und wenigstens eine FLP-Operation (14) aufweist, und wobei der generierte Programmcode (13) in das ausführbare Steuerungsprogramm (3) übersetzt wird, so dass bei Ausführung des Steuerungsprogramms (3) auf dem Steuerungssystem (2) ein Teil des Steuerungsprogramms (3) auf der FXP-Unit (8) ausgeführt wird und ein anderer Teil des Steuerungsprogramms (3) auf der FLP-Unit (9) ausgeführt wird, **dadurch gekennzeichnet, dass** bei mehreren parallelen Berechnungssträngen des Steuerungsmodells (4) solche Stränge von Modelloperationen (10, 11) des Steuerungsmodells (4) in FLP-Operationen (14) des Programmcodes (13) umgewandelt werden, die bei Umsetzung in FXP-Operationen die meisten FXP-Umskalierungen im Programmcode (13) aufweisen würden.

2. Computerimplementiertes Verfahren (1) nach Anspruch 1, **dadurch gekennzeichnet, dass** so viele Modelloperationen (10, 11) des Steuerungsmodells (4) in FXP-Operationen (12) und FLP-Operationen (14) des Programmcodes (13) umgewandelt werden, dass im zeitlichen Mittel vergleichbare Auslastungen der FXP-Units (8) und der FLP-Units (9) der Rechnereinheit (7) des Steuerungssystems (2) resultieren.

3. Computerimplementiertes Verfahren (1) nach Anspruch 1 oder 2, **dadurch gekennzeichnet, dass** die Durchmischung von FXP-Operationen (12) des Programmcodes (13) mit FLP-Operationen (14) des Programmcodes (13) so hoch ist, dass bei Ausführung des Steuerungsprogramms (3) auf der Rechnereinheit (7) des Steuerungssystems (2) der Programmcode (13) gleichzeitig auf den FXP-Units (8) und den FLP-Units (9) der Rechnereinheit (7) ausgeführt wird.

4. Computerimplementiertes Verfahren (1) nach einem der Ansprüche 1 bis 3, **dadurch gekennzeichnet, dass** das Verhältnis der Anzahl von FXP-Operationen (12) zu der Anzahl von FLP-Operationen (14) des Programmcodes (13) dem Verhältnis von pro Zeiteinheit auf den FXP-Units (8) ausführbaren FXP-Operationen und auf den FLP-Units (9) ausführbaren FLP-Operationen entspricht.

5. Computerimplementiertes Verfahren (1) nach einem der Ansprüche 1 bis 4, **dadurch gekennzeichnet, dass** ganzzahlige Modelloperationen des Steuerungsmodells (4) in FXP-Operationen (12) des Programmcodes (13) zur Berechnung auf einer FXP-Unit (8) umgesetzt werden, insbesondere inkrementelle oder dekrementelle Zähler für Schleifen, Switch-Case-Operationen oder Bit-Operationen.

6. Computerimplementiertes Verfahren (1) nach einem der Ansprüche 1 bis 5, **dadurch gekennzeichnet, dass** eine Modelloperation (10, 11) des Steuerungsmodells (4), die bei Umsetzung in eine FXP-Operation im Programmcode (13) eine Fixed-Point-Umskalierung erfahren würde, in eine FLP-Operation (14) des Programmcodes (13) umgewandelt wird.

7. Computerimplementiertes Verfahren (1) nach einem der Ansprüche 1 bis 6, **dadurch gekennzeichnet, dass** eine Modelloperation (10) im Steuerungsmodell (4), die bei Umsetzung als FXP-Operation im Programmcode (13) zu einer oder mehreren m-Bit-FXP-Operationen im Programmcode führen würde, stattdessen in eine oder mehrere m-Bit FLP-Operation (14) im Programmcode (13) umgewandelt wird, wenn die Rechnereinheit (7) eine m-Bit FLP-Unit (9) aufweist aber keine m-Bit FXP-Unit (8) aufweist.

8. Computerimplementiertes Verfahren (1) nach einem der Ansprüche 1 bis 7, **dadurch gekennzeichnet, dass** wenigstens eine Modelloperation im Steuerungsmodell (4) als eine FLP-Operation (11) bestimmt ist und in eine FXP-Operation (12) des Programmcodes (13) umgewandelt wird und/oder dass wenigstens eine Modelloperation im Steuerungsmodell (4) als eine FXP-Operation (10) bestimmt ist und in eine FLP-Operation (14) des Programmcodes (13) umgewandelt wird.

9. Computerimplementiertes Verfahren (1) nach Anspruch 8, **dadurch gekennzeichnet, dass** eine solche Auswahl von als FLP-Operationen (11) des Steuerungsmodells (4) bestimmte Modelloperationen in FXP-Operationen (12) des Programmcodes (13) umgewandelt wird und/oder dass eine solche Auswahl von als FXP-Operationen (12) des Steuerungsmodells (4) bestimmte Modelloperationen in FLP-Operationen (14) des Programmcodes (13) umgewandelt wird, dass die Anzahl der durch die Umwandlung verursachten Umrechnungen vom Datentyp Fixed-Point zum Datentyp Floating-Point im Programmcode (13) und/oder vom Datentyp Floating-Point zum Datentyp Fixed-Point im Programmcode (13) zumindest lokal minimal ist.

10. Computerimplementiertes Verfahren (1) nach einem der Ansprüche 1 bis 9, **dadurch gekennzeichnet, dass** der aus dem graphischen Steuerungsmodell (4) erzeugte Programmcode (13) in einer Hardware-Beschreibungssprache vorliegt, wobei der Programmcode (13) die Rechnereinheit (7) des Steuerungssystems (2) mit mindestens einer FXP-Unit (8) und mit mindestens einer FLP-Unit (9) beschreibt, wobei die Rechnereinheit (7) die Funktionalität des Steuerungsmodells (4) realisiert.

11. Computerimplementiertes Verfahren (1) nach Anspruch 10, **dadurch gekennzeichnet, dass** die Hardware-Beschreibungssprache ein Field Programmable Gate Array beschreibt und programmiert.

12. Computerprogrammprodukt mit einem Computerprogramm, das Softwaremittel zur Durchführung des Verfahrens nach einem der Ansprüche 1 bis 11 aufweist, wenn das Computerprogramm mit einem Computer ausgeführt wird.

## Claims

1. A computer-implemented method (1) for generating a control program (3) from a graphical control model (4) for executing on a control system (2), the control system (2) comprising a process interface and the control system (2) being set up so that at least one process parameter of a physical process (6) is captured by the control system (2) via the process interface (5) and/or one output parameter for influencing the physical process (6) can be output by the control system (2), the control system (2) comprising at least one electronic computer unit (7) having at least one fixed-point execution unit (FXP Unit, 8) and having at least one floating-point execution unit (FLP Unit, 9), the graphic control model (4) comprising a plurality of model operations (10, 11), the graphic control model (4) being translated into program code (13) so that the generated program code (13) comprises at least one FXP operation (12) and at least one FLP operation (14), and the generated program code (13) being translated into the executable control program (3) so that when the control program (3) is executed on the control system (2), a part of the control program (3) is executed on the FXP unit (8) and a different part of the control program (3) is executed on the FLP unit, **characterized in that** for a plurality of parallel computing threads of the control model (4), such threads that would comprise the most FXP rescalings in the program code (13) if converted to FXP operations are converted from model operations (10, 11) of the control model (4) into FLP operations (14) of the program code (13).

2. The computer-implemented method (1) according to claim 1, **characterized in that** enough model operations (10, 11) of the control model (4) are converted into FXP operations (12) and FLP operations (14) of the program code (13) so as to result in comparable average utilization of the FXP units (8) and the FLP units (9) of the computer unit (7) over time.

3. The computer-implemented method (1) according to claim 1 or 2, **characterized in that** the blending of FXP operations (12) of the program code (13) with FLP operations (14) of the program code (13) is high enough so that when executing the control program (3) on the computer unit (7) of the control system (2), the program code (13) is executed simultaneously on the FXP units (8) and the FLP units (9) of the computer unit (7).

4. The computer-implemented method (1) according to any one of the claims 1 through 3, **characterized in that** the ratio of the number of FXP operations (12) to the number of FLP operations (14) of the program code (13) corresponds to the ratio of FXP operations able to be executed on the FXP units (8) to the FLP operations able to be executed on the FLP units (9).

5. The computer-implemented method (1) according to any one of the claims 1 through 4, **characterized in that** whole-number model operations of the control model (4) are implemented as FXP operations (12) of the program code (13) for computing on an FXP unit (8), particularly incremental or decremental counters for loops, switch-case operations, or bit operations.

6. The computer-implemented method (1) according to any one of the claims 1 through 5, **characterized in that** a model operation (10, 11) of the control model (4) such as would undergo fixed-point rescaling when implemented in an FXP operation in the program code (13) is converted into an FLP operation (14) of the program code (13).

7. The computer-implemented method (1) according to any one of the claims 1 through 6, **characterized in that** a model operation (10) in the control model (4) such as would lead to one or more m-bit FXP operations in the program code if implemented as an FXP operation in the program code (13) is instead converted into one or more m-bit FLP operations (14) in the program code (13) if the computer unit (7) comprises an m-bit FLP unit (9) but no m-bit FXP unit (8).

8. The computer-implemented method (1) according to any one of the claims 1 through 7, **characterized in that** at least one model operation is determined in the control model (4) as an FLP operation (11) and is converted into an FXP operation (12) of the program code (13) and/or that at least one model operation is determined in the control model (4) as an FXP operation (10) and is converted into an FLP operation (14) of the program code (13).

9. The computer-implemented method (1) according to claim 8, **characterized in that** a selection of model operations determined as FLP operations (11) of the control model (4) is converted into FXP operations (12) of the program code (13), and/or that a selection of model operations determined as FXP operations (12) of the control model (4) is converted into FLP operations (14) of the program code (13), such that the number of the conversions from fixed-point data type to floating-point data type in the program code (13) and/or from floating-point data type to fixed-point data type in the program code (13) caused by the converting is at least locally minimal.

10. The computer-implemented method (1) according to any one of the claims 1 through 9, **characterized in that** the program code (13) generated from the graphic control model (4) is present in a hardware-description language, wherein the program code (13) describes the computer unit (7) of the control system (2) having at least one FXP unit (8) and having at least one FLP unit (9), wherein the computer unit (7) implements the functionality of the control model (4).

11. The computer-implemented method (1) according to claim 10, **characterized in that** the hardware-description language describes and programs a field-programmable gate array.

12. A computer program product having a computer program comprising software means for performing the method according to any one of the claims 1 through 11 when the computer program is executed by means of a computer.

## Revendications

1. Procédé (1) mis en oeuvre sur ordinateur pour générer un programme de commande (3) pouvant être exécuté sur un système de commande (2) à partir d'un modèle de commande graphique (4), dans lequel le système de commande (2) présente une interface de processus et le système de commande (2) est configuré de manière à ce que le système de commande (2) puisse, via l'interface de processus (5), saisir au moins une grandeur de processus d'un processus physique (6) et/ou émettre une variable de sortie pour influencer le processus physique (6), sachant que le système de commande (2) comporte au moins une unité de calcul électronique (7) avec au moins une unité d'exécution en virgule fixe (unité FXP, 8) et avec au moins une unité d'exécution en virgule flottante (unité FLP, 9), sachant que le modèle de commande graphique (4) présente un nombre d'opérations de modèle (10, 11), sachant que le modèle de commande graphique (4) est traduit en un code de programme (13) de sorte que (13) le code de programme (13) généré présente au moins une opération FXP (12) et au moins une opération FLP (14), et sachant que le code de programme (13) généré est traduit en le programme de commande (3) exécutable de sorte que lors de l'exécution du programme de commande (3) sur le système de commande (2), une partie du programme de commande (3) est exécutée sur l'unité FXP (8) et une autre partie du programme de commande (3) est exécutée sur l'unité FLP (9), **caractérisé en ce que** dans plusieurs flux de calcul parallèles du modèle de commande (4), les flux d'opérations de modèle (10, 11) du modèle de commande (4), qui présenteraient le plus grand nombre de mises à l'échelle FXP dans le code de programme (13) lors de la conversion en opérations FXP, sont convertis en opérations FLP (14) du code programme (13).

2. Procédé (1) mis en oeuvre sur ordinateur selon la revendication 1, **caractérisé en ce que** des opérations de modèle (10, 11) du modèle de commande (4) sont converties en opérations FXP (12) et opérations FLP (14) du code de programme (13) en un nombre tel que, en moyenne dans le temps, des charges comparables en résultent pour les unités FXP (8) et les unités FLP (9) de l'unité de calcul (7) du système de commande (2).

3. Procédé (1) mis en oeuvre sur ordinateur selon la revendication 1 ou 2, **caractérisé en ce que** le mélange des opérations FXP (12) du code de programme (13) avec les opérations FLP (14) du code de programme (13) est élevé au point que, lors de l'exécution du programme de commande (3) sur l'unité de calcul (7) du système de commande (2), le code de programme (13) soit exécuté simultanément sur les unités FXP (8) et les unités FLP (9) de l'unité de calcul (7).

4. Procédé (1) mis en oeuvre sur ordinateur selon l'une des revendications 1 à 3, **caractérisé en ce que** le rapport du nombre d'opérations FXP (12) au nombre d'opérations FLP (14) du code de programme (13) correspond au rapport des opérations FXP exécutables par unité de temps sur les unités FXP (8) et des opérations FLP exécutables sur les unités FLP (9).

5. Procédé (1) mis en oeuvre sur ordinateur selon l'une des revendications 1 à 4, **caractérisé en ce que** des opérations de modèle en nombres entiers du modèle de commande (4) sont converties en opérations FXP (12) du code de programme (13) en vue du calcul sur une unité FXP (8), en particulier des numérateurs incrémentiels ou décrémentiels pour les boucles, les opérations Switch Case ou les opérations binaires.

6. Procédé (1) mis en oeuvre sur ordinateur selon l'une des revendications 1 à 5, **caractérisé en ce qu'**une opération de modèle (10, 11) du modèle de commande (4), qui subirait une mise à l'échelle en virgule fixe lors de la conversion en une opération FXP dans le code de programme (13), est convertie en une opération FLP (14) du code de programme (13).

7. Procédé (1) mis en oeuvre sur ordinateur selon l'une des revendications 1 à 6, **caractérisé en ce qu'**une opération de modèle (10) dans le modèle de commande (4), qui conduirait à une ou plusieurs opérations FXP m-bit dans le code de programme lors de la conversion en une opération FXP dans le code de programme (13), est plutôt convertie en une ou plusieurs opérations FLP m-bit (14) dans le code de programme (13) dans la mesure où l'unité de calcul (7) comporte une unité FLP m-bit (9), mais pas d'unité FXP m-bit (8).

8. Procédé (1) mis en oeuvre sur ordinateur selon l'une des revendications 1 à 7, **caractérisé en ce qu'**au moins une opération de modèle dans le modèle de commande (4) est déterminée en tant qu'opération FLP (11) et convertie en une opération FXP (12) du code de programme (13) et/ou qu'au moins une opération de modèle dans le modèle de commande (4) est déterminée en tant qu'opération FXP (10) et convertie en une opération FLP (14) du code de programme (13).

9. Procédé (1) mis en oeuvre sur ordinateur selon la revendication 8, **caractérisé en ce que** des opérations de modèle déterminées en tant qu'opérations FLP (11) du modèle de commande (4) sont converties en opérations FXP (12) du code de programme (13) et/ou que des opérations de modèle déterminées en tant qu'opérations FXP (12) du modèle de commande (4) sont converties en opérations FLP (14) du code de programme (13) en une sélection telle que le nombre des conversions provoquées par la transformation, du type de données à virgule fixe au type de données à virgule flottante dans le code de programme (13), et/ou du type de données à virgule flottante au type de données à virgule fixe dans le code de programme (13), soit minimal au moins localement.

10. Procédé (1) mis en oeuvre sur ordinateur selon l'une des revendications 1 à 9, **caractérisé en ce que** le code de programme (13) généré à partir du modèle de commande graphique (4) est disponible en un langage de description de matériel, sachant que le code de programme (13) décrit l'unité de calcul (7) du système de commande (2) avec au moins une unité FXP (8) et avec au moins une unité FLP (9), sachant que l'unité de calcul (7) réalise la fonctionnalité du modèle de commande (4).

11. Procédé (1) mis en oeuvre sur ordinateur selon la revendication 10, **caractérisé en ce que** le langage de description de matériel décrit et programme un réseau de portes programmables.

12. Produit de programme informatique avec un programme informatique, qui comporte des moyens pour la réalisation du procédé selon l'une des revendications 1 à 11 lorsque le programme informatique est exécuté à l'aide d'un ordinateur.
